# EUROPÄISCHE PATENTSCHRIFT

(11) **EP 1 583 633 B1**
(45) Veröffentlichungstag und Bekanntmachung des Hinweises auf die Patenterteilung: **27.02.2008**
(21) Anmeldenummer: 03779697.6
(22) Anmeldetag: 17.11.2003
(51) Int. Cl.: B23K 26/38, B23K 26/14

(54) **VERFAHREN UND VORRICHTUNG ZUM LASERBOHREN UNTER EINER PROZESSGASATMOSPHÄRE**
METHOD AND DEVICE FOR LASER DRILLING IN A PROCESS GAS ATMOSPHERE
PROCEDE ET DISPOSITIF DE PERCAGE LASER DANS UNE ATMOSPHERE DE GAZ DE TRAITEMENT

(30) Priorität: 07.01.2003 DE 10300134
(43) Veröffentlichungstag der Anmeldung: 12.10.2005
(73) Patentinhaber: ROBERT BOSCH GMBH, 70442 Stuttgart (DE)
(72) Erfinder: CALLIES, Gert, 77815 Buehl (DE); WILLERT, Markus, D-89551 Koenigsbronn (DE); OSSWALD, Kai, D-64832 Babenhausen (DE)
(86) Internationale Anmeldenummer: PCT/DE2003/003801
(87) Internationale Veröffentlichungsnummer: WO 2004/060603

(56) Entgegenhaltungen:
- EP-A- 0 299 143
- DE-A- 19 908 630
- GB-A- 1 585 609
- US-A- 5 744 780
- US-A- 6 070 813
- PATENT ABSTRACTS OF JAPAN Bd. 2002, Nr. 06, 4. Juni 2002 (2002-06-04) & JP 2002 050849 A (MATSUSHITA ELECTRIC IND CO LTD), 15. Februar 2002 (2002-02-15)
- SUN J ET AL: "INERT GAS BEAM DELIVERY FOR ULTRAFAST LASER MICROMACHINING AT AMBIENT PRESSURE" JOURNAL OF APPLIED PHYSICS, AMERICAN INSTITUTE OF PHYSICS. NEW YORK, US, Bd. 89, Nr. 12, 15. Juni 2001 (2001-06-15), Seiten 8219-8224, XP001066091 ISSN: 0021-8979

## Beschreibung

Die vorliegende Erfindung betrifft ein Verfahren zum Laserbohren nach dem Oberbegriff des Patentanspruchs 1 und eine entsprechende Vorrichtung nach dem Oberbegriff des Patentanspruchs 8 (siche, z.B., US-A-6 070 813).

### Stand der Technik

In Düsen von Kraftstoffeinspritzsystemen werden herkömmlicherweise Präzisionskleinstlöcher mittels Erodierverfahren eingebracht. Mittels dieser Technik können derzeit in Großserien minimale Durchmesser von etwa 120 µm hergestellt werden. Das Laserbohren ermöglicht darüber hinaus auch die Herstellung von Präzisionslöchern mit Durchmessern kleiner als 120 µm, ist aber als Großserienverfahren bisher noch nicht eingeführt.

Auf dem Gebiet der Kraftstoffeinspritzung werden in zunehmendem Maße konische Löcher dahingehend gefordert, dass eine Kraftstoffaustrittsöffnung einen kleineren Durchmesser besitzt als eine Kraftstoffeintrittsöffnung. Derartige Präzisions-Kleinstlöcher kommen bereits in Systemen für Dieselkraftstoffe (Direkteinspritzung) oder für Benzinkraftstoffe (Saugrohr- und Direkteinspritzung) zur Anwendung.

In der DE 199 055 71 C1 ist ein Laserbohrverfahren dargelegt. Hierbei führt ein Laserstrahl relativ zu einem Werkstück eine Taumelbewegung aus. Dadurch wird erreicht, dass innerhalb des Werkstücks eine Kegelmantelfläche durchlaufen wird. Die Polarisationsebene des Laserstrahls wird dabei synchron zur Taumelbewegung gedreht.

In der DE 100 548 53 A1 ist ein Verfahren zum Einbringen eines Mikrolochs in ein Werkstück mittels Laserstrahls offenbart. Hierbei wird der Fokus des Laserstrahls fortlaufend auf einer zur Lochachse konzentrischen Kreisbahn entlang bewegt, wobei der Laserstrahl aus einer Folge von kurzen Laserpulsen zusammengesetzt ist.

Grundsätzlich ist es beim Laserbohren eines Werkstückes auch bekannt, ein sogenanntes Backing als Rückraumschutzmaterial einzusetzen. So wird beispielsweise in US 5,744,780 A beschrieben, dass ein Backing zur Erhöhung der Bearbeitungsqualität der Bohrung vorgesehen ist. Gemäß US 6,070,813 A wird mit einem Backing auch eine Absorption des Laserstrahls erzielt.

Die Möglichkeit, ein Werkstück mittels eines plasmaunterstützten Laserverfahrens zu bearbeiten, wird in der Arbeit von Sun et al: "Inert gas beam delivery for ultrafast laser micromachining at ambient pressure" (J. Appl. Phys., Vol. 89, No. 12, 8219-8224, 2001) diskutiert. Das Plasma wird dabei durch eine Wechselwirkung von Laserstrahl und Prozessgas gebildet.

Bei allen bisherigen Bohrprozessen muss die erzeugte Bohrung durch hydroerosives (HE) Runden nachbehandelt werden. Dies dient beispielsweise bei Kraftstoffeinspritzsystemen (neben der Verbesserung der Bohrwandoberfläche und der Verringerung der Streuung zwischen den hydraulischen Durchsätzen der einzelnen Bohrlöcher einer Düse) vor allem der Verrundung der Kante des Kraftstoffeinlaufs. Dies führt zu einer deutlichen Verminderung des Strömungswiderstandes an dieser Stelle und vermindert außerdem unerwünschte Kavitationserscheinungen.

Eine weitere deutliche Verbesserung in dieser Richtung wird durch die Kombination von Konizität und ausgeprägter HE-Verrundung erreicht.

Mit der Erfindung soll während des Bohrprozesses mit Kurzpuls- (ns) oder Ultrakurzpuls- (ps/fs) Lasern gezielt der Verlauf des Austritts der Bohrung (Kraftstoffeinlauf) beeinflusst werden. Insbesondere soll eine einfache und unaufwendige Bereitstellung verschiedener symmetrischer und asymmetrischer Austrittsverläufe, beispielsweise mit Ausweitungen und Ausbauchungen realisiert werden.

Dieses Ziel wird erreicht mit einem Verfahren zum Laserbohren mit den Merkmalen des Patentanspruchs 1 sowie einer entsprechenden Vorrichtung mit den Merkmalen des Patentanspruchs 8.

### Vorteil der Erfindung

Bei dem erfindungsgemäß vorgesehenen Verfahren zum Laserbohren wird ein Bereich eines Bauteils mit einem Laserstrahl beaufschlagt, wobei innerhalb dieses Bereiches ein Loch erzeugt wird. Diese Beaufschlagung bzw. Bohrung wird unter einer einstellbaren Prozessgasatmosphäre durchgeführt. Aufgrund einer Wechselwirkung zwischen dem verwendeten Laserstrahl und dem gewählten Prozessgas innerhalb des von dem Laserstrahl beaufschlagten Bereiches bzw. Loches wird dabei durch Ionisierung des Prozessgases Plasma gebildet. Zusätzlich ist erfindungsgemäß vorgesehen, dass an einer durch den Laserstrahl erzeugten Austrittsöffnung des Loches ein verkippbares Backing angeordnet wird.

Das erfindungsgemäß verwendete Prozessgas bzw. Gasgemisch dient primär der Steigerung der Bearbeitungsqualität sowie einer Optimierung der Bearbeitungszeit, insbesondere einer Verkürzung der Bearbeitungszeit. Hierbei wird durch die Schaffung spezieller Prozessgastmosphären indirekt Einfluss auf die Laserstrahl-Materie-Wechselwirkung im beaufschlagten Bereich bzw. Loch und somit auf den Bearbeitungsprozess genommen. Die Art der Prozessgasatmosphäre bestimmt die Eigenschaften der sich erfindungsgemäß bildenden Plasmen bei der Wechselwirkung mit der eingesetzten Laserstrahlung mit dem zu bearbeitenden Material bzw. Werkstoff, wobei die Plasmabildung durch Materialdampf unterstützt wird. Als Laser kommt beispielsweise ein Festkörperlaser (Nd:YAG) zum Einsatz. Verschiedene Prozessgase erzeugen jeweils Plasmen, die sich z. B. in ihrer Temperatur und Expansion unterscheiden können.

Als Vorteil des erfindungsgemäßen Verfahrens ist insbesondere zu erwähnen, dass für die Herstellung von Verrundungen die Prozesszeit des HE-Rundens deutlich herabgesetzt werden kann, bzw. dass HE-Runden gar nicht mehr erforderlich ist. Außerdem können durch das erfindungsgemäße Verfahren Kraftstoffeintritte in einer Art gestaltet werden, wie dies das HE-Runden nicht erlaubt. Insbesondere können durch das erfindungsgemäße Verfahren asymmetrische Verrundungen eingebracht werden oder symmetrische respektive asymmetrische Ausbauchungen kurz hinter dem Kraftstoffeintritt erzeugt werden. Verrundungen haben den Vorteil eines verbesserten Einströmverhaltens während Ausbauchungen dazu dienen können, Verwirbelungen, die am Kraftstoffeintritt entstehen können, zu verhindern oder auch gezielt zu erzeugen.

Bedeutsam für die gezielte Gestaltung des Austritts ist insbesondere der Plasmazustand kurz vor und während des Wiederaustritts des Laserstrahls aus dem Material. Je nach den gewählten Parametern wie Gaszusammensetzung, Gasdruck und/oder Gasströmungsrichtung können sich Verrundungen, Ausbauchungen und/oder scharfe Austrittskanten ausbilden, wobei dies rotationssymmetrisch gleichmäßig über den gesamten Bohrlochaustritt erfolgen kann, oder die Phänomene nur auf einer Seite auftreten können.

Rückraumschutzmaterialien, sogenannte Backings haben die Aufgabe, eine freie Propagation des Laserstrahls nach seinem Wiederaustritt aus dem Werkstoff bzw. Material zu verhindern. Dies kann herkömmlicherweise dazu dienen, ein anderes Werkstück bzw. Bauteil oder Bereiche desselben Werkstücks vor Beschädigung zu schützen. Außerdem können derartige Backings den Zustand eines geschlossenen Bohrlochs für eine bestimmte Zeit aufrechterhalten und somit dazu beitragen, dass eine Austrittsöffnung bzw. ein Bohrungsaustritt wie gewünscht entstehen kann.

Backings bestehen je nach Anwendungsfall aus verschiedensten Materialien, wie z. B. Polymeren, Metallen oder keramischen Werkstoffen.

Ein Backing kann die Ausbildung eines Bohrlochaustrittes beeinflussen, indem es die ankommende Laserstrahlung zurück in Richtung Werkstoff reflektiert oder indem es das aus dem Prozessgas ionisierte Plasma in seiner Ausbreitung beeinflusst und somit zu einem weiteren Materialabtrag führt. Einen weiteren Einfluss kann ein Plasma haben, das gegebenenfalls durch den Abtrag des Backings entsteht.

Vorteilhafte Ausgestaltungen des erfindungsgemäßen Verfahrens bzw. der erfindungsgemäßen Vorrichtung sind Gegenstand der Unteransprüche.

Bei dem Verfahren wird als Prozessgas zweckmäßigerweise ein inertes Gas, wie Stickstoff, insbesondere unter Zusatz von Edelgasen wie Helium, Argon und dergleichen verwendet. Der Einsatz eines derartigen Prozessgases hat zum Vorteil, dass ein zu beaufschlagender Bereich inert wird, so dass eine Oxidation dieses Bereiches vermieden wird. Außerdem wird durch eine derartige Zusammensetzung des Prozessgases erreicht, dass hinreichende Bohrwandoberflächenqualitäten und Schmelzfilmdicken gewährleistet sind.

Desweiteren ist bevorzugt vorgesehen, dass das Prozessgas unter Druck gesetzt ist, wobei der Druck bevorzugt unter etwa 1,5 bar eingestellt ist. Hierdurch wird die Entstehung von Ausbauchungen in den hergestellten Löchern begünstigt. Es ist ebenfalls möglich, höhere Drücke zu wählen, wodurch Ausbauchungen unterdrückt werden können. Allgemein ist festzustellen, dass die erfindungsgemäß verwendeten Drücke zu Ausbauchomen in der Nähe des Randbereiches des zu bearbeitenden Werkstücks führen. Je höher der verwendete Druck, desto tiefer verlagert sich eine Ausbauchom in das Innere des Werkstücks.

Desweiteren kann bevorzugt vorgesehen sein, die Beaufschlagungsrichtung des Prozessgases durch Verkippung relativ zur Richtung des Laserstrahles einzustellen. Der Winkel der Verkippung kann hierbei insbesondere zwischen 0° und 15° liegen. Durch geeignete Wahl eines Verkippungswinkels wird gewährleistet, dass Lochformen, insbesondere Ausbauchungen oder Aufweitungen, verschieden stark asymmetrisch ausgebildet werden können.

Durch die bei der Durchführung des erfindungsgemäßen Verfahrens gebildeten Plasmen können errechnete Drücke in der Größenordnung einiger 100 bar und Strömungsgeschwindigkeiten von mehreren 10 km/s in dem beaufschlagten Bereich bzw. Loch entstehen. Dies hat vorteilhafterweise zur Folge, dass unter anderem durch ein beschleunigtes Ausbringen einer dadurch entstehenden Schmelze zu einem höheren Materialabtrag aktiv beigetragen wird.

Die Ionisation des Prozessgases kann, außer von den herrschenden Einbringungsbedingungen des Prozessgases (Zusammensetzung, Druck, Richtung), insbesondere auch durch Eigenschaften des Laserstrahls wie Wellenlänge und Leistung beeinflusst sein.

Ein hierbei zum Einsatz kommendes Backing kann thermische bzw. optische Eigenschaften aufweisen, die die Form bzw. Ausgestaltung der Austrittsöffnung beeinflussen. Insbesondere ist hierbei vorgesehen, geeignete metallische Werkstoffe, insbesondere Kupfer, vorzusehen. Diese Materialeigenschaften sind insbesondere für das Maß der Aufweitung der Austrittsöffnung von Bedeutung. So entstehen beispielsweise bei Laserwellenlängen von 1064 µm und einem in geeignetem Abstand zur Austrittsöffnung angeordneten Backing aus Kupfer relativ große, hingegen bei einem Backing aus Stahl relativ kleine Aufweitungen. Desweiteren kann die Geometrie des Backings die Form bzw. Ausgestaltung der Austrittsöffnung beeinflussen. Erfindungsgemäß wird insbesondere die Verwendung von Kupfer als Backingmaterial bevorzugt. Es sei darauf hingewiesen, dass Kupfer in der Regel im Bereich des Motorenbaus ungern verwendet wird, da es im Falle von Kupferablagerungen im Motorbereich aufgrund von Wechselwirkungen mit im verwendeten Kraftstoff vorhandenen Schwefel zur Sulfidbildung kommen kann, wodurch die Langlebigkeit des Motors negativ beeinflusst wird. Die im Rahmen der vorliegenden Erfindung ausnutzbaren Eigenschaften des Kupfers im Zusammenhang mit der Erzeugung von speziell ausgebildeten Löchern in Werkstücken überwiegen diese Nachteile jedoch deutlich.

Desweiteren kann bevorzugt vorgesehen sein, das Backing in einem die Form der Austrittsöffnung beeinflussenden Abstand zur Austrittsöffnung anzuordnen. Ein solcher Abstand wird bevorzugt zwischen 20 µm bis 200 µm gewählt.

Durch eine geeignete Wahl eines solchen Abstandes lässt sich die Geometrie der Aufweitung des Bohrlochaustritts in einfacher Weise beeinflussen.

Das Backing ist, gemäß der Erfindung, durch Verkippung relativ zur Austrittsöffnung unter einem vorgegebenen Winkel angeordnet. Unterschiedlich stark gewählte Verkippungen erzeugen hierbei unterschiedlich stark asymmetrische Aufweitungen der Austrittsöffnung des Bohrlochs. Hierbei bevorzugt zur Anwendung kommende Winkel bewegen sich zwischen 0° und 20°.

Durch eine geeignete Anordnung des Backings relativ zur Austrittsöffnung werden in einem Bereich der Austrittsöffnung eines Loches in einfacher Weise asymmetrische Verrundungen eingebracht, was zum Vorteil hat, dass ein nachträgliches HE-Runden gar nicht mehr oder nur in begrenztem Umfang erforderlich ist.

Die erfindungsgemäße Vorrichtung, mit welcher insbesondere das erfindungsgemäße Verfahren durchführbar ist, zeichnet sich dadurch aus, dass sie einen Laserstrahl, eine Haltevorrichtung für ein zu bearbeitendes Bauteil und Mittel zur Einstellung einer Prozessgasatmosphäre aufweist.

Als Mittel zur Einstellung der Prozessgasatmosphäre kann bevorzugt wenigstens eine Gasdüse vorgesehen sein. Hiermit ist strömendes Prozessgas geeigneter Zusammensetzung in einfach zu steuernder bzw. regelnder Weise unter geeignetem Druck sowie einem geeigneten Winkel auf den zu beaufschlagenden Bereich eines Werkstücks richtbar. Eine geeignete Zusammensetzung des Prozessgases kann durch einen Gasmischer bereitgestellt werden.

Gemäß der Erfindung, ist an einer am Bauteil durch Einwirkung des Laserstrahls erzeugten Austrittsöffnung ein Backing positioniert.

### Zeichnung

Die vorliegende Erfindung wird nun anhand der beigefügten Zeichnung weiter erläutert. In dieser zeigt bzw. zeigen
Figur 1 eine schematische Darstellung einer bevorzugten Ausführungsform der erfindungsgemäßen Vorrichtung zur Durchführung des erfindungsgemäßen Laserbohrverfahrens,
Figur 2 ein Detail der Vorrichtung gemäß Figur 1 in vergrößerter Darstellung,
Figur 3a bis Figur 3e schematische Darstellungen von erfindungsgemäß und nicht erfindungsgemäß hergestellten Bohrlöchern in seitlicher Schnittansicht, und
Figuren 4a bis 4c schematische Darstellungen von erfindungsgemäß hergestellten und nicht erfindungsgemäß Bohrlöchern in seitlicher Schnittansicht bzw. in Draufsicht auf der Grundlage elektronenmikroskopischer Aufnahmen.

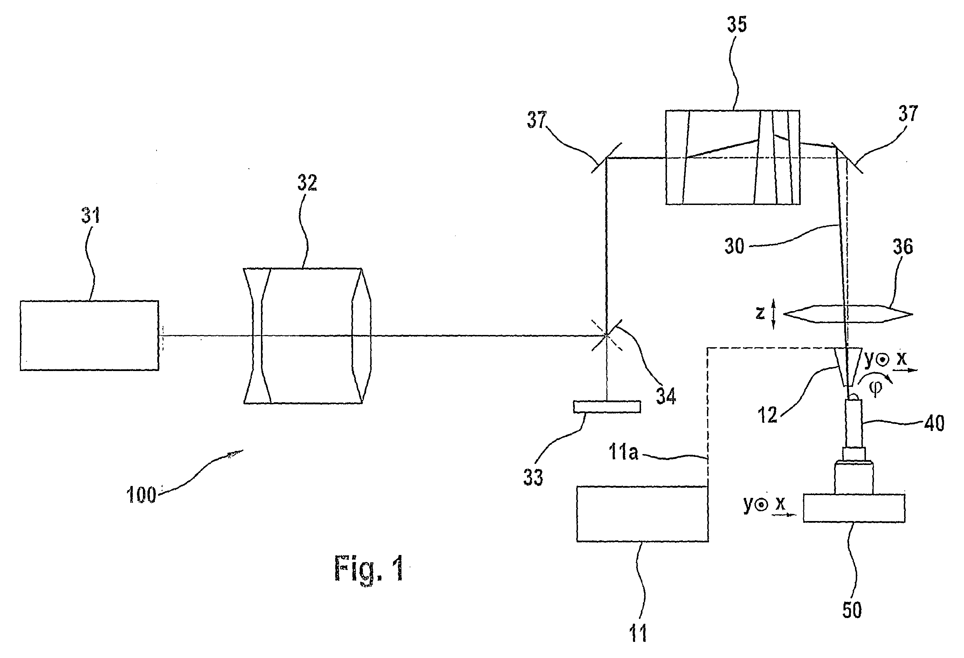

In Figur 1 ist die dargestellte Ausführungsform der erfindungsgemäßen Vorrichtung insgesamt mit 100 bezeichnet. Ein durch einen Laser 31 erzeugter Laserstrahl 30 durchquert zunächst eine Aufweitungsoptik 32. Der Laserstrahl 30 wird an einem Shutter 34 teilweise reflektiert bzw. geschaltet, wobei hierbei gestreute bzw. überschüssige Reststrahlung durch einen Strahlsumpf 33 absorbiert wird. Die Richtung des Laserstrahls 30 wird innerhalb seines Strahlenganges durch einen oder mehrere Spiegel 37 umgelenkt. Innerhalb des Strahlenganges ist außerdem eine Trepanieroptik 35 angeordnet, außerdem weist die Vorrichtung zur Fokussierung des Laserstrahls eine Fokussierlinse 36 auf. Desweiteren tritt der Strahlengang des Laserstrahl 30 durch eine Gasdüse 12 hindurch und trifft auf ein zu bearbeitendes Werkstück 40.

Das zur Durchführung des erfindungsgemäßen Verfahrens benötigte Prozessgas wird durch einen Gasmischer 11 bereitgestellt und über eine Leitung 11a auf eine Gasdüse 12 gegeben. Das Prozessgas wird mit Hilfe der Gasdüse 12 unmittelbar auf das Werkstück 40 geblasen.

Das Werkstück 40 ist in einer Handhabung 50 befestigt. Diese Handhabung 50 kann durch geeignete Maßnahmen in alle drei Raumrichtungen x, y bzw. z bewegt werden, so dass eine für die Durchführung des Verfahrens geeignete Positionierung des Werkstückes 40 einstellbar ist. Durch Positionierung der Fokussierlinse 36 entlang der Achse z kann der Laserstrahl 30 in seiner Fokuslage variiert werden. Ebenso lässt sich die Gasdüse 12 relativ zu der Richtung des durch die Gasdüse 12 gehenden Strahlenganges des Laserstrahls 30 bzw. zum Werkstück 40 positionieren. Dabei erfolgt eine Bewegung entlang der Richtung x bzw. y. Auch eine Verdrehung der Gasdüse 12 ist mittels eines geeigneten Mechanismus realisierbar, wobei eine derartige Verschwenkbarkeit in Figur 1 mit ϕ symbolisiert ist.

Mit dieser Ausführungsform der erfindungsgemäßen Vorrichtung 100 ist das erfindungsgemäße Verfahren zum Laserbohren in einfacher Weise realisierbar. Innerhalb eines zu beaufschlagenden Bereiches trifft der Laserstrahl 30, nachdem sein Strahlengang die Gasdüse 12 durchquert hat, auf das Werkstück 40. Ein gewähltes bzw. eingestelltes Prozessgas strömt, mittels des Gasmischers 11 bereitgestellt, aus einer einstellbaren Richtung, unter Druck aus der Düse 12 auf den zu beaufschlagenden Bereich des Werkstücks 40. Insbesondere wird hiermit die Ionisation von Prozessgas zu Plasma durch Wechselwirkung zwischen Prozessgas und Laserstrahl 30 innerhalb des Beaufschlagungsbereiches begünstigt.

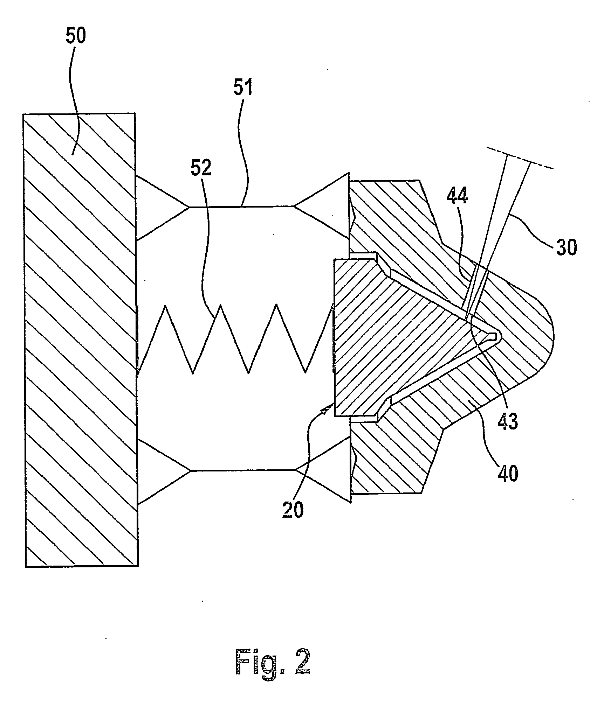

In Figur 2 ist ein Detail aus Figur 1 dargestellt. Das Werkstück 40 ist gemäß der Erfindung über eine Halterung 51 relativ zur Handhabung 50 fest positionierbar, wobei eine geeignete Position des Werkstücks 40 relativ zur Handhabung 50 über die Halterung 51 durch Bewegung einstellbar ist. Ebenso ist ein Backing 20 über eine Halterung 52 relativ zur Handhabung 50 fest positionierbar, wobei eine geeignete Position des Backings 20 relativ zur Handhabung 50 über die Halterung 52 durch Bewegung einstellbar ist. Durch Steuerung der Halterung 51 bzw. 52 lassen sich Backing 20 und Werkstück 40 in einer gewünschten Weise relativ zueinander räumlich positionieren, wobei dies vor aber auch während des beschriebenen Verfahrens realisiert werden kann.

Ein mittels des Laserbohrverfahrens in dem Werkstück 40 zu erzeugendes Loch 44 entsteht an der Stelle des Werkstückes 40, an der der Laserstrahl 30 auf dem Werkstück 40 auftrifft bzw. dieses beaufschlagt, wobei der Laserstrahl an einer Austrittsöffnung 43 des Loches 44 an der dem Backing 20 zugewandeten Seite des Werkstücks 40 austritt. Das in einem geeigneten Winkel aus einem geeigneten Abstand aus einer nicht dargestellten Gasdüse auf das Werkstück 40 geblasene Prozessgas wird durch Wechselwirkung mit dem Laserstrahl 30 im Bereich des Lochs 44 bzw. einem Bereich der Austrittsöffnung 43 durch Wechselwirkung zu Plasma ionisiert.

Hierdurch entstehen gezielt geometrische Ausgestaltungen im Bereich des Loches 44 bzw. der Austrittsöffnung 43, wie nun anhand nachfolgender Figuren beispielhaft dargestellt wird.

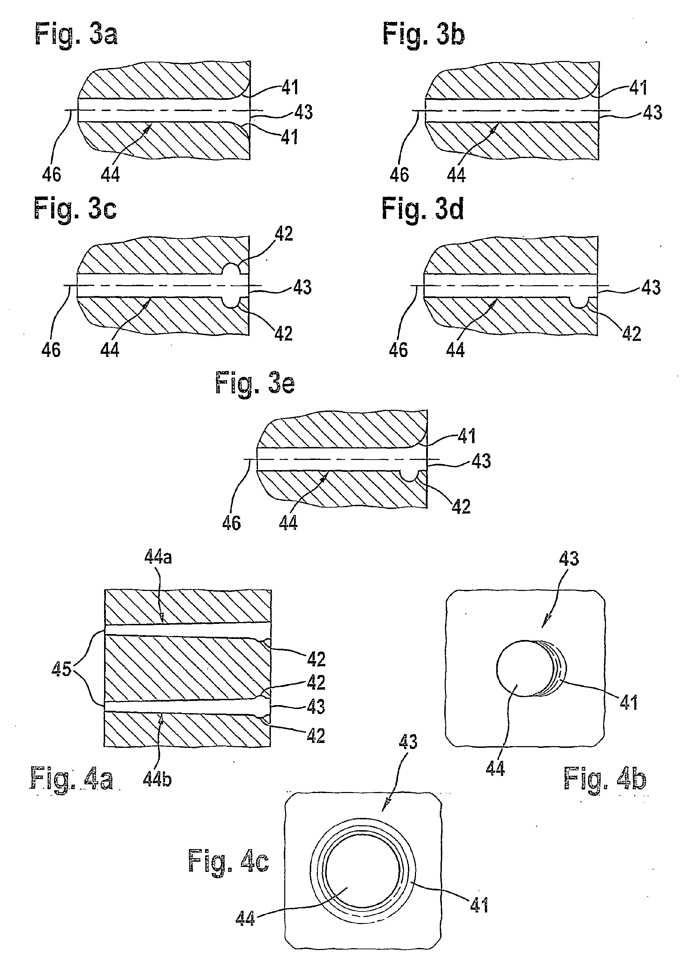

Die Figuren 3a bis 3e zeigen detaillierte Ansichten von Löchern bzw. Bohrungen 44 innerhalb des Werkstückes 40 in einer Schnittansicht parallel zu einer Bohrungsmittelachse 46 des Loches 44. Ein nicht dargestellter Laserstrahl 30 wurde dabei von links parallel zur Bohrlochmittelachse 46 auf das Werkstück 40 gerichtet, in dem Bereich seines Auftreffens durchbohrte der Laserstrahl 30 das Werkstück 40, wobei der Ort des Eintritts in den Figuren 3a bis 3e nicht dargestellt ist. Die jeweiligen Austrittsöffnungen 43 der Löcher 44 sind in den Figuren 3a bis 3e erkennbar.

In Figur 3a, die nicht unter der Erfindung steht, weist ein Bereich der Austrittsöffnung 43 des Bohrlochs 44 eine symmetrische Aufweitung 41 bzw. Verrundung auf, welche durch vorzugsweise symmetrische Anordnung eines nicht dargestellten Backings bzgl. der Bohrungsmittelachse 46 innerhalb eines Bereiches hinter, in der Darstellung der Figuren 3a bis 3e rechts neben, der Austrittsöffnung 43 verursacht wurde. Das Maß dieser Aufweitung 41 bzw. Verrundung ist durch geeignete Beabstandung des Backings relativ zur Austrittsöffnung 43 beeinflussbar.

In Figur 3b ist die Aufweitung 41 eines Bereiches der Austrittsöffnung 43 des Bohrloches 44 asymmetrisch ausgebildet bzw. nur einseitig verrundet. In diesem Beispiel wurde das erfindungsgemäße Verfahren so durchgeführt, dass das Backing unter Verkippung unter einem geeigneten Winkel zur Bohrlochmittelachse 46 in einem Bereich hinter der Austrittsöffnung 43 angeordnet wurde.

Bohrloch 44 aus Figur 3c siche Seite 12 weist symmetrische bzw. beidseitige Ausbauchungen 42 in einem Bereich der Austrittsöffnung 43 des Loches 44 auf. Eine derartige Ausbauchung 42 ist beispielsweise durch die beschriebene Wechselwirkung zwischen Laserstrahl und gebildetem Plasma realisierbar.

Das in Figur 3d siche Seite 12 dargestellte Bohrloch 44 weist eine asymmetrische Ausbauchung 42 auf. Eine derartige asymmetrische Ausbildung der Ausbauchung 42 wird durch Verkippung einer das Prozessgas einleitenden Düse unter einem geeigneten Winkel relativ zur Bohrlochmittelachse 46 bzw. dem Laserstrahl begünstigt.

In Figur 3e ist das Bohrloch 44 derart ausgestaltet, dass es eine Kombination aus Aufweitung 41 sowie Ausbauchung 42 in einem Bereich der Austrittsöffnung 43 aufweist.Eine derartige Gestaltung ist durch Kombination der oben beschriebenen Maßnahmen (Verkippung des Backings und Prozessgasbeaufschlagung unter einem Winkel) realisierbar.

In den Figuren 4a bis 4c sind weitere Ausgestaltungen von innerhalb eines Werkstückes 40 erzeugten Löchern 44 bzw. erzeugten Austrittsöffnungen 43 im Längsschnitt bzw. in Draufsicht dargestellt.

Figur 4a siche Seite 12 zeigt zwei verschiedene Formen von Ausbauchungen 42 im Längsschnitt. Desweiteren sind durch Beaufschlagung des Werkstücks durch einen von links auftreffenden Laserstrahl erzeugte Eintrittsöffnungen 45 dargestellt, die einen kleineren Durchmesser als die Austrittsöffnungen 43 rechts aufweisen. Im oben dargestellten Loch 44a ist die Ausbauchung 42 analog zur Figur 3d asymmetrisch, in dem unteren Loch 44b hingegen sind analog zur Figur 3c zwei symmetrische Ausbauchungen 42 dargestellt.

Die in Figur 4b dargestellte Austrittsöffnung 43 weist eine asymmetrische Aufweitung 41 bzw. Verrundung auf. Diese wurde mit entsprechenden Maßnahmen, wie sie unter Bezugnahme auf Figur 3b beschrieben wurden, realisiert. Aus derselben Perspektive wie Figur 4b zeigt Figur 4c siche Seite 12 eine Austrittsöffnung 43 mit symmetrischer Aufweitung 41 bzw. Verrundung, welche durch analoge Durchführung des erfindungsgemäßen Verfahrens, wie es unter Bezugnahme auf Figur 3a beschrieben wurde, realisiert.

## Patentansprüche

1. Verfahren zum Laserbohren, bei welchem ein Bereich eines Werkstücks (40) mit einem Laserstrahl (30) beaufschlagt wird, so dass in diesem Bereich ein Loch (44) erzeugt wird, **dadurch gekennzeichnet, daß**
- das Verfahren unter einer einstellbaren Prozessgasatmosphäre derart durchgeführt wird, dass aufgrund einer Wechselwirkung zwischen Laserstrahl und Prozessgas in dem vom Laserstrahl (30) beaufschlagten Bereich bzw. Loch (44) Plasma gebildet wird,
- an einer durch den Laserstrahl (40) erzeugten Austrittsöffnung (43) des Loches (44) ein Backing (20) angeordnet wird, und
- das Backing (20) unter einem bestimmten, die Form der Austrittsöffnung (43) beeinflussenden Winkel verkippt zur Austrittsöffnung und/oder dem Werkstück (40) angeordnet ist.

2. Verfahren nach Anspruch 1, **dadurch gekennzeichnet, dass** als Prozessgas ein inertes Gas, insbesondere Stickstoff, insbesondere unter Zusatz von Edelgasen wie Helium, Argon und dergleichen verwendet wird.

3. Verfahren nach einem der Ansprüche 1 oder 2, **dadurch gekennzeichnet, dass** das Prozessgas unter Druck gesetzt wird, wobei das Prozessgas insbesondere unter einen Druck von maximal 1,5 bar gesetzt wird.

4. Verfahren nach einem der Ansprüche 1 bis 3, **dadurch gekennzeichnet, dass** die Beaufschlagungsrichtung des Prozessgases durch Verkippung relativ zur Richtung des Laserstrahls (30) eingestellt wird, wobei der Winkel der Verkippung insbesondere bis zu 15° beträgt.

5. Verfahren nach einem der Ansprüche 1 bis 4, **dadurch gekennzeichnet, dass** ein für das Backing (20) verwendetes Material mit die Form der Austrittsöffnung (43) beeinflussenden thermischen und/oder optischen Eigenschaften (4), insbesondere ein metallischer Werkstoff, insbesondere ein kupferenthaltender Werkstoff, ausgewählt wird.

6. Verfahren nach einem der Ansprüche 1 bis 5, **dadurch gekennzeichnet, dass** das Backing (20) in einem die Form der Austrittsöffnung (43) beeinflussenden Abstand zur Austrittsöffnung (43) und/oder dem Werkstück (40) angeordnet ist, wobei der Abstand bevorzugt zwischen 20 µm bis 200 µm beträgt.

7. Verfahren nach einem der Ansprüchen 1 bis 6, **dadurch gekennzeichnet, dass** der Winkel der Verkippung des Backings (20) bis zu 20° beträgt.

8. Vorrichtung zum Laserbohren, mit einem Laser (31), welcher ein Bereich eines Werkstücks (40) mit einem Laserstrahl (30) zur Erzeugung eines Loches (44) beaufschlagt,
**dadurch gekennzeichnet, daß** die Vorrichtung folgende Merkmale aufweist:
- Mittel (11,12) zur Einstellung einer Prozessgasatmosphäre in dem vom Laserstrahl (30) beaufschlagten Bereich und/oder Loch (44) derart, dass es aufgrund einer Wechselwirkung zwischen Laserstrahl (44) und Prozessgas zu einer Bildung von Plasma in dem von dem Laserstrahl beaufschlagten Bereich bzw. Loch (44) kommt,
- ein an einer Austrittsöffnung (43) eines erzeugten Loches (44) positionierbares und gegenüber der Austrittsöffnung (43) und/oder dem Werkstück (40) verkippbares Backing (20) zur Formung der Austrittsöffnung (43) vorgesehen ist, wobei
- eine Halterung (51) zum relativen Positionieren des Werkstückes relativ zu einer Handhabung (50), und eine weitere Halterung (52) zum relativen Positionieren des Backings (20) zur Handhabung (50) und eine Steuerung vorgesehen sind, so dass durch Steuerung der Halterungen (51, 52) Backing (20) und Werkstück (40) vor oder während des Laserbohrens des Werkstückes (40) in einer gewünschten Weise sich relativ zueinander räumlich positionieren lassen.

9. Vorrichtung nach Anspruch 8, **dadurch gekennzeichnet, dass** die Mittel (11,12) zur Einstellung einer Prozessgasatmosphäre wenigstens eine Gasdüse (12) aufweisen.

## Claims

1. Method for laser drilling, in which a region of a workpiece (40) is exposed to a laser beam (30), so that a hole (44) is produced in this region, **characterized in that**
- the method is carried out in an adjustable process gas atmosphere in such a way that, as a result of an interaction between the laser beam and the process gas, plasma is formed in the region or hole (44) that is exposed to the laser beam (30),
- a backing (20) is arranged at an outlet opening (43) of the hole (44) that is produced by the laser beam (40), and
- the backing (20) is arranged such that it is tilted in relation to the outlet opening and/or the workpiece (40) at a specific angle, influencing the form of the outlet opening (43).

2. Method according to Claim 1, **characterized in that** an inert gas, in particular nitrogen, in particular with the addition of noble gases such as helium, argon and the like, is used as the process gas.

3. Method according to either of Claims 1 and 2, **characterized in that** the process gas is subjected to pressure, the process gas being subjected in particular to a pressure of at most 1.5 bar.

4. Method according to one of Claims 1 to 3, **characterized in that** the direction of exposure of the process gas is adjusted by tilting in relation to the direction of the laser beam (30), the angle of the tilting being in particular up to 15°.

5. Method according to one of Claims 1 to 4, **characterized in that** a material used for the backing (20) is selected with thermal and/or optical properties (4) that influence the form of the outlet opening (43), in particular a metallic material, in particular a copper-containing material.

6. Method according to one of Claims 1 to 5, **characterized in that** the backing (20) is arranged at a distance from the outlet opening (43) and/or the workpiece (40) that influences the form of the outlet opening (43), the distance preferably being between 20 µm and 200 µm.

7. Method according to one of Claims 1 to 6, **characterized in that** the angle of the tilting of the backing (20) is up to 20°.

8. Device for laser drilling, with a laser (31), which exposes a region of a workpiece (40) to a laser beam (30) to produce a hole (44), **characterized in that** the device has the following features:
- means (11, 12) for adjusting a process gas atmosphere in the region and/or hole (44) that is exposed to the laser beam (30) in such a way that, as a result of an interaction between the laser beam (30) and the process gas, there is a formation of plasma in the region or hole (44) that is exposed to the laser beam,
- a backing (20), which can be positioned at an outlet opening (43) of a produced hole (44) and can be tilted in relation to the outlet opening (43) and/or the workpiece (40), is provided for forming the outlet opening (43),
- wherein a mount (51) for the relative positioning of the workpiece in relation to a handling fixture (50), and a further mount (52) for the relative positioning of the backing (20) in relation to the handling fixture (50) and a controller are provided, so that, by controlling the mounts (51, 52), the backing (20) and the workpiece (40) can be spatially positioned in relation to each other in a desired way before or during the laser drilling of the workpiece (40).

9. Device according to Claim 8, **characterized in that** the means (11, 12) for adjusting a process gas atmosphere have at least one gas nozzle (12).

## Revendications

1. Procédé de perçage par laser, selon lequel une zone d'une pièce à usiner (40) est frappée par un rayon laser (30), pour y former un trou (44),
**caractérisé en ce que**
- le procédé est exécuté sous une atmosphère de gaz de traitement réglable, de façon que, suite à une interaction entre le rayon laser et le gaz de traitement dans la zone du trou (44) frappé par le rayon laser (30), il se forme du plasma,
- une contre-pièce (20) est disposée à une ouverture de sortie (43) du trou (44) produite par le rayon laser (30), et
- la contre-pièce (20) bascule d'un angle déterminé sur l'ouverture de sortie, et cet angle influence la forme de l'ouverture de sortie (43) et/ou sa disposition dans la pièce à usiner (40).

2. Procédé selon la revendication 1,
**caractérisé en ce qu'**
on utilise comme gaz de traitement un gaz inerte, en particulier de l'azote, en particulier avec addition de gaz rares comme l'hélium, l'argon et analogues.

3. Procédé selon l'une des revendications 1 ou 2,
**caractérisé en ce que**
le gaz de traitement est mis sous pression, en particulier sous une pression de 1,5 bar au maximum.

4. Procédé selon l'une des revendications 1 à 3,
**caractérisé en ce qu'**
on règle la direction d'incidence du gaz de traitement par basculement par rapport à la direction du rayon laser (30), l'angle du basculement pouvant atteindre en particulier 15°.

5. Procédé selon l'une des revendications 1 à 4,
**caractérisé en ce que**
la matière utilisée pour la contre-pièce (20), en particulier une matière contenant du cuivre, est choisie pour ses propriétés thermiques et/ou optiques (4) qui influencent la forme de l'ouverture de sortie (43).

6. Procédé selon l'une des revendications 1 à 5,
**caractérisé en ce que**
la contre-pièce (20) est disposée à une distance de l'ouverture de sortie (43) et/ou de la pièce à usiner (40) de préférence entre 20 µm et 200 µm, pour influencer la forme de l'ouverture de sortie (43).

7. Procédé selon l'une des revendications 1 à 6,
**caractérisé en ce que**
l'angle de basculement de la contre-pièce (20) peut atteindre 20°.

8. Dispositif de perçage par laser (31) dans lequel un rayon laser (30) frappe une zone d'une pièce à usiner (40) pour produire un trou (44),
**caractérisé en ce que**
le dispositif présente les caractéristiques suivantes :
- des moyens (11, 12) pour régler une atmosphère de gaz de traitement dans la zone et/ou le trou (44) frappé par le rayon laser (30), de façon que, par suite d'une interaction entre le rayon laser (44) et le gaz de traitement, il se forme du plasma dans la zone et/ou le trou (44),
- sur l'ouverture de sortie (43) d'un trou (44), on prévoit une contre-pièce (20), positionnable et basculable par rapport à l'ouverture de sortie (43) et/ou la pièce à usiner (40), pour former l'ouverture de sortie (43) ;
- on prévoit une fixation (51) pour le positionnement relatif de la pièce à usiner par rapport à un dispositif de maniement (50), et une autre fixation (52) pour le positionnement relatif de la contre-pièce (20), et par la commande des fixations (51, 52), on peut positionner dans l'espace, l'une par rapport à l'autre, de façon voulue, la contre-pièce (20) et la pièce à usiner (40), avant ou pendant le perçage au laser.

9. Dispositif selon la revendication 8,
**caractérisé en ce que**
les moyens (11, 12) pour régler l'atmosphère de gaz de traitement présentent au moins une tuyère à gaz (12).
